# EUROPEAN PATENT APPLICATION

(11) **EP 2 352 073 A1**
(43) Date of publication of application: **03.08.2011**
(21) Application number: 09824734.9
(22) Date of filing: 22.10.2009
(51) Int. Cl.: G06F 1/32, G06F 1/26, G06F 3/041, H04M 1/73

(54) **PORTABLE ELECTRONIC DEVICE, METHOD OF SAVING POWER IN PORTABLE ELECTRONIC DEVICE, AND POWER SAVING PROGRAM**

(30) Priority: 05.11.2008 JP 2008284351
(71) Applicant: NEC Corporation, Minato-ku Tokyo 108-8001 (JP)
(72) Inventor: OKADA, Takashi, Tokyo 108-8001 (JP)
(74) Representative: Vossius & Partner
(86) International application number: PCT/JP2009/068545
(87) International publication number: WO 2010/053034

(57) **Abstract**

A portable electronic device includes an information display which displays information; a touch panel which receives an operation instruction by being touched; a timer which measures time; a storage unit which stores a display stop time until power supply to the information display is stopped and a touch panel stop time until power supply to the touch panel is stopped; and a controller which stops the power supply to the information display when the timer measures elapsing of the display stop time after the touch panel shifted to the non-operated state, and stops the power supply to the touch panel when the timer measures elapsing of the touch panel stopping time after the touch panel shifted to the non-operated stated.

## Description

### TECHNICAL FIELD

The present invention relates to a portable electronic device, and a power saving method and a power saving program for the portable electronic device.

### BACKGROUND ART

In recent years, the demands for an expansion of a display screen size and a realization of advanced information display have been increasing along with a functional enhancement in the portable electronic devices.

An input / output interface that can exert convenience of the various functions is required while maintaining the case size that does not impair the portability at that time. For this reason, the portable terminal with a touch panel, with which such as input and output operations are performed by touching a display screen, have been increasing.

For example, Japanese Patent Application Laid-Open No.2002-345057 discloses a remote control apparatus with a display means having a touch panel that controls power supply by touching the touch panel. Then a television is being remote-controlled by this remote control apparatus.

On the other hand, for improvement of convenience of the electronic device, an extension of utilization time of devices by battery drive desired. Therefore, Japanese Patent Application Laid - Open No.H8 - 129444 discloses technology for extending battery life by suppressing generation of leak current between the both electrode panels in a touch panel in which one side of a panel is connected to power supply and other side of the electrode panel is grounded via output resistance.

That is, in the touch panel of the above-mentioned constitution, since both electrode panels contact by pushing the touch panel, the current flows into output resistance and voltage occurs.

It is detectable whether the touch panel pushed with the existence of this voltage.

However, in a configuration with which power supply always connected to one electrode panel, leak current may flow via both electrode panels.

This leakage current serves as increase of power consumption. Therefore, if voltage is applied only when detecting the voltage of output resistance, the power consumption by the leakage current is suppressed.

### DISCLOSURE OF THE INVENTION

By the way, when the state (non-operated state) where operation is not performed keeps on predetermined time, for expanding the life of the battery, it shifts to the standby state automatically and control which performs stop of electric supply or restriction of the amount of electric supply is performed. Such control is valid in power saving of apparatus with large power dissipation, such as the display device and the luminous source.

However, in an electronic apparatus equipped with a touch panel disclosed in Japanese Patent Application Laid- Open No.2002 - 345057 and Japanese Patent Application Laid - Open Na.H8- 129444, since the electric supply to the touch panel is continued also in the standby state, useless power consumption may happen.

Therefore, decreasing the power consumption in the standby state is performed by adding a mechanical switch etc.

A main object of the present invention is to provide a portable electronic device and a power saving method and a power saving program for the portable electronic device which even enable power saving for the electronic device in a standby state.

### BRIEF DESCRIPTION OF THE DRAWINGS

FIG.1 is a block diagram of a portable electronic apparatus according to a first embodiment of the present invention.
FIG.2 is a top view of a portable electronic device according to a second embodiment of the present invention.
FIG.3 is a block diagram of a portable electronic device according to the second embodiment.
FIG.4 is a flowchart of a portable terminal according to related art.
FIG.5 is a flowchart of a portable terminal according to the second embodiment of the present invention.

### BEST MODE FOR CARRYING OUT THE INVENTION

A first exemplary embodiment of the present invention will be described.

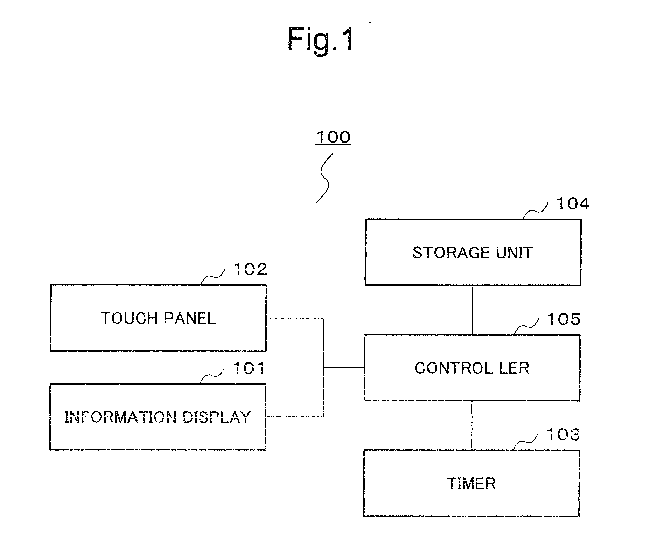

FIG. 1 is a block diagram of a portable electronic device 100 according to the first exemplary embodiment of the present invention.

The portable electronic device 100 includes an information display 101, a touch panel 102, a timer 103, a storage unit 104 and a controller 105.

The information display 101 indicates information such as an operational mark.

The touch panel 102 is an input device with translucency which is mounted on the information display, and accepts operation directions by being touched. The timer 103 measures time. The storage unit 104 stores a display stop time until the electric power currently supplied to the information display 101 is stopped, and the touch panel stopping time until the electric power currently supplied to the touch panel 102 is stopped. The controller 105 performs control to suspend supply of electric power to the information display 101 when the timer 103 times passing of the display stop time after the touch panel 102 is brought to the non-operated state, and to suspend supply of electric power to the touch panel 102 when the timer 103 times passing of the touch panel stop time after the touch panel 102 is brought to the non-operated state.

Accordingly, since power supply suspension control is performed independently for the information display 101 and the touch panel 102, efficient power saving becomes possible.

Next, the second exemplary embodiment of the present invention will be described. Meanwhile, in the following description, although a portable terminal is taken for instance as an example of a portable electronic device, the present invention is not limited to a portable terminal. Furthermore, also in the following description, although a case, in which a liquid crystal display apparatus is employed as an information display, is described, other display apparatus, for example, such as an organic electroluminescence display may be used. In this case, since an organic electroluminescence display is a self-luminous device, it does not require a light source separately. Accordingly, a target of a power control is electric power which required for the self-luminous. On the other hand, since the liquid crystal display apparatus is not a self-luminous device, the light source like a backlight may be required separately. Accordingly, concerning a power control in the liquid crystal display apparatus, the electric power required for the information display apparatus and the electric power required for lighting of the backlight is control objects. Therefore, the controlled objects in the liquid crystal display apparatus are the electric power needed for the information display apparatus, and the electric power needed for the backlight.

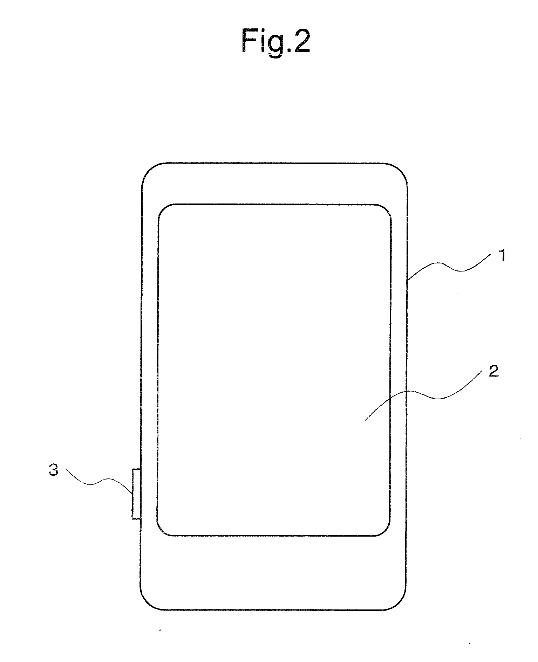

FIG. 2 is a top view of a portable terminal 1 mounted a touch panel according to the second exemplary embodiment of the present invention.

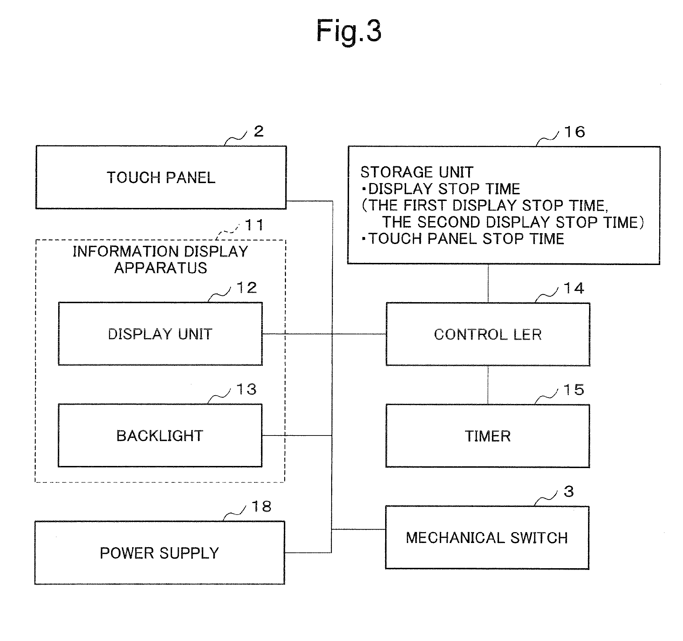

FIG. 3 is a block diagram of the portable terminal 1. The portable terminal 1 includes a touch panel 2, a mechanical switch 3, an information display apparatus 11, a controller 14, a timer 15, a storage unit 16 and a power source 18.

The controller 14 controls such as the touch panel 2, the mechanical switch 3, the information display apparatus 11, the timer 15, the storage unit 16 and the power source 18.

The information display apparatus 11 includes the display 12 which indicates a operational mark (character or icon) for operating the various function and a backlight 13 which irradiates light to the display 12 and is enable of recognition of the operation mark.

The backlight 13 is a light source formed by a cathode-ray tube or the like.

The information display apparatus 11 shifts to a standby state when user does not operate it among a predetermined time.

The touch panel 2 is an input device with translucency that is mounted over the display 12.

Thus, when the user presses the touch panel 2 of an area corresponding to the operation mark displayed on the display 12 by a pen or a fingertip, a stop of the function assigned to this operating mark is instructed. The touch panel 2 shifts to the standby state when the predetermined time passes after operating by the user is no longer performed.

The mechanical switches 3 is a switch that is disposed at the position that does not interfere with the touch panel 2. In Fig. 2, the mechanical switch 3 projects from the side section of the housing.

When the mechanical switch 3 is pushed in the state where the power supply to the touch panel 2 and the information display apparatus 11 or the like has stopped, the power supply to the touch panel 2 or the like is started. On the other hand, when the mechanical switch 3 is pushed in the state where the power supply to the touch panel 2 and the information display apparatus 11 or the like is performed, the power supply to the touch panel 2 or the like is stopped.

Meanwhile, the present invention can be applied to the touch panel of various configurations, if a configuration, in which electric power is supplied to the touch panel and operational directions is performed by pressing it, is included, and also can be applied to an electronic device using the touch panel.

The timer 15 measures time after operation by the user became into inactive.

Hereinafter, the state, which is not operated by the user, is described with "the non-operated state", and the time duration of it is described with "non - operated time".

The storage unit 16 stores time which makes the touch panel 2 and the information display apparatus 11 shift to the standby state. Hereinafter, time to shift the information display apparatus 11 to the standby state is described with "a display stop time", and time to shift the touch panel 2 to the standby state is described with "a touch panel stop time".

The power source 18 is controlled by the controller 14, and supplies electric power to such as the display 12, the backlight 13 and the touch panel 2.

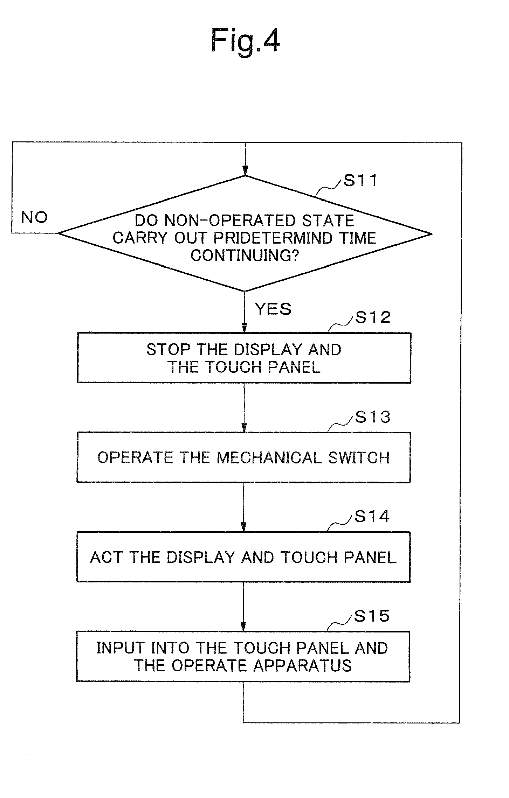

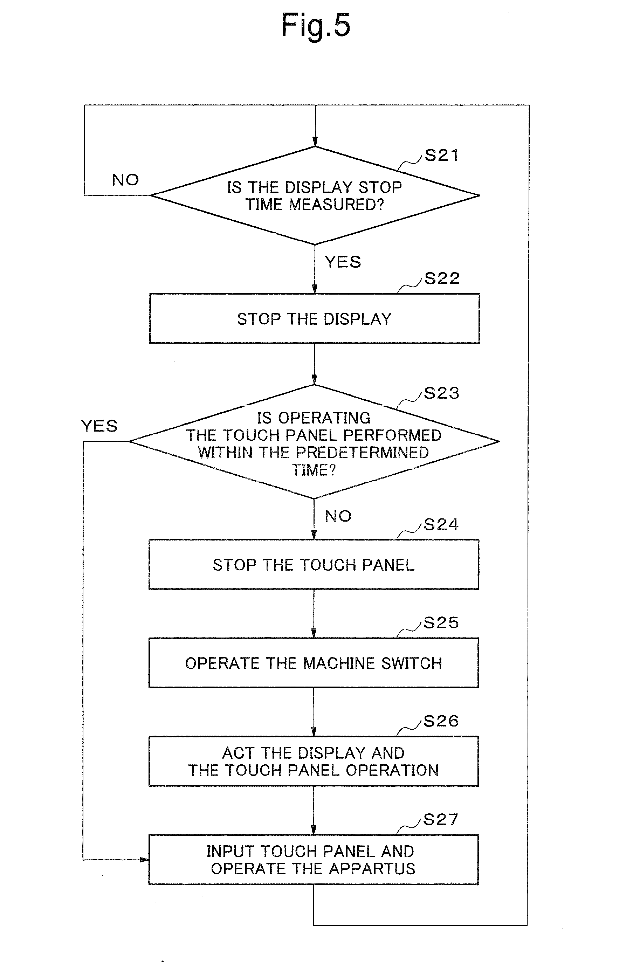

Next, operation of such the portable terminal will be described. FIG. 4 is a flowchart of the portable terminal according to related art and FIG. 5 is a flowchart of the portable terminal according to the second exemplary embodiment of the present invention.

First, operation of the portable terminal according to related art shown in FIG. 4 will be described.

In the state, in which electric power is supplied to the touch panel, judgment, whether non- operated state continues for the predetermined time is performed (Step S11) .

Then, when the non - operated state continues during the predetermined time, the power supply to the backlight, the display and the touch panel is stopped, and the portable terminal shift to the standby state (Step S12) .

For the purpose of making them return into a normal operation state from this standby state, the user presses the mechanical switch 3 (Step S13) . By this operation, power supply to the backlight and the touch panel is started, and the portable terminal shifts to the normal operation state (Step S14) . Then, the user directs operation of the desired function by pressing the touch panel (Step S15) .

On the other hand, the portable terminal according to the second exemplary embodiment of the present invention shown in FIG. 5 operates as follow.

In the normal operation state in which the power supply is applied to the display 12, the backlight 13 and the touch panel 2 or the like, the timer 15 measures non-operated time. The controller 14 judges whether the timer 15 measures the display stop time (Step S21) . The display stop time is stored in the storage unit 16.

When the timer 15 measures the display stop time, the controller 14 stops power supply to the display 12 and the backlight 13 (Step S22) . This is a state in which power supply to the display 12 and the backlight 13 is suspended but power supply to the touch panel 2 continues. Hereafter, such a state is described to be "the first standby state". Furthermore, the state in which all power supply to the display 12, the backlight 13 and the touch panel 2 is stopped, is described to be "the second standby state". A standby state in a portable terminal of related art is corresponding to the second standby state.

In this first standby state, when the controller 14 detects the user contact with the touch panel 2, the controller 14 judges whether contact to this touch panel 2 is performed before passing of a touch panel stop time (Step S23) .

And when it is judged that contact of the touch panel 2 is performed before the set time passing away, power saving process goes to step S26, and power supply to the display 12 and the backlight 13 is started to return into the normal operation state (Step S26) .

As aforementioned, returning from the first standby state to the normal operation state is described "a halfway return".

Meanwhile, in step S23, when contact of the touch panel 2 detected before elapse of the touch panel stop time after shifting to the first standby state, if it judges whether a user meant the halfway return and contacted, the halfway return by incorrect contact prevents.

For example, when the user puts the portable terminal 1 into a bag, the touch panel 2 may be touched accidentally. In this case, it is clear that the user does not intend halfway return.

Thus, in order to prevent halfway return by such contact by incorrect contact, the condition for executing halfway return is stored in the storage unit 16 in advance, and only when the halfway return condition is satisfied, the halfway return performs.

For such condition for halfway return, for example, a plurality of positions of the touch panel 2 is stored. With this, only when the pressed position in the touch panel 2 detected during the first standby state, matches with the stored position, the halfway return enables. Only when the pressed position of the touch panel 2 detected in the first standby state and the position stored agree, the halfway return enabled. As another methods, the halfway return is enabled, when the trajectory shape (for example, trajectory shape, such as the circle) which the contact position forms is stored in advance in the storage unit 16 and approximate (similar) trajectory shape is detected on such a contact trajectory.

By the way, when the information display apparatus 11 includes plural devices that consume electric power such as the display 12 and the backlight 13, power consumption can be effectively reduced by stopping the power supply to the display 12 and the backlight 13 to different timing.

When the electric power stop to the display 12 and the backlight 13 is performed to different timing, the display stop time is composed by the first display stop time and the second display stop time of time longer than the first display stop time. In this case, the first display stop time, the second display stop time and the touch panel stop time is stored in the storage unit 16.

The electric power that the backlight 13 consumes is very large in the liquid crystal display apparatus. An Information (such as operational mark) indicated on the display 12 is also visible although it is not clear while in the state that the backlight 13 is off.

Thus, even if power supply to the display 12 stopped after predetermined time from turning off the backlight 13, as the state of that time is the first standby state, there is not much substantial influence.

For example, consideration of shifting into the first standby state by an intermission of operation, caused by user initiation of thinking during operation, is as follows. In this case, the user often memorizes an operational mark or the like shown on the display 12 as a persistence of vision. Therefore, even if the operating mark currently displayed on display 12 by turning backlight 13 becomes ambiguous, since an afterimage compensates the obscurity, the user does not take the operating mark. The electric power which the backlight 13 consumes during the first display stop time and the second display stop time reduces.

And now, in step S23, when contact of the touch panel 2 is not detected until the touch panel stop time passes, the controller 14 stops the power supply to the touch panel 2 and makes the portable terminal shift to the second standby state (Step S24) .

In order to return to the normal operation state from the second standby state, the user needs to press the mechanical switch 3 (Step S25) . When the mechanical switch 3 is pressed, the controller 14 starts the power supply to the display 12, the backlight 13 and the touch panel 2 (Step S26). The portable terminal 1 resumes to the normal operation state by the above so that operational directions from the touch panel 2 become possible (Step S27) .

Thus, in the portable terminal of the pertinent art, the power supply to the display section, backlight, and the touch panel stops simultaneously. However, in the second exemplary embodiment, portable terminal 1 shifts to the first standby state, when the power supply to information display apparatus 11 stops. After that, the portable terminal 1 shifts to the second standby state, when the power supply to the touch panel 13 stops.

Therefore, since the portable terminal shifts to the standby state gradually and the power consumption in the display section and backlight which consume large electric power reduces, effective power saving is enabled.

The procedure of the power saving method mentioned above can be transformed into the program code that can execute the computer, and can record the program on the information recording medium. Such a program can also be installed in the server or the portable terminal by the communication network.

Although the present invention has been explained with reference to the embodiments and the examples in the above, the present invention is not limited to the above-mentioned embodiments and examples. Various changes may be made in the composition of the present invention and details, which a person skilled in the art can understand without departing from the scope of the invention.

This application claims priority of Japanese Patent Application No. 2008-284351 filed November. 5, 2008, the contents of which are hereby incorporated by reference in their entirety as if fully set forth within.

## Claims

1. A portable electronic device, comprising:
an information display which displays information;
a touch panel which receives an operation instruction by being touched;
a timer which measures time;
a storage unit which stores a display stop time until power supply to the information display is stopped and a touch panel stop time until power supply to the touch panel is stopped; and
a controller which stops the power supply to the information display when the timer measures elapsing of the display stop time after the touch panel shifted to the non-operated state, and stops the power supply to the touch panel when the timer measures elapsing of the touch panel stopping time after the touch panel shifted to the non-operated stated.

2. A portable electronic device according to claim 1, wherein
the touch panel stop time is set as time longer than the display stop time.

3. A portable electronic device according to claims 1 or 2, wherein
the information display comprises a display which displays the information, and a backlight which irradiates this display;
the storage unit stores a first display stop time which is the display stop time, and a second display stop time which is time longer than the first display stop time and shorter than the touch panel stopping time; and
the controller stops the power supply to the backlight when the first display stop time elapses and stops the power supply to the display section when the second display stop time elapses.

4. A portable electronic device according to any one of claims 1 to 3, wherein
the controller resumes the power supply to the information display and the touch panel at the same time.

5. A power saving method for the portable electronic device, comprising :
a time measurement procedure for measuring a time after a touch panel shifts to a non-operating condition,
a first stop procedure for stopping a power supply to an information display when a predetermined display stop time is measured by the timing measurement procedure, and
a second stop procedure for stopping the power supply to the touch panel when a predetermined touch panel stopping time is measured by the timing measurement procedure.

6. A power saving method for the portable electronic device according to claim 5 ; wherein
the touch panel stopping time is set as a time longer than the display stop time.

7. A power saving method for the portable electronic device according to claims 5 or 6 ; further comprising;
the procedure for stopping the power supply to a backlight which irradiates a display which displays the information when a first display stop time elapses, and
the procedure for stopping the power supply to the display when a second display stop time elapses.

8. A power saving program for a portable electronic apparatus, comprising :
a time measurement step which measures a time after a touch panel shifts to a non- operating condition,
a first stop step for stopping a power supply to a information display when the time measurement step measures a predetermined display stop time, and
a second stop step for stopping the power supply to the touch panel when the time measurement step measures a predetermined touch panel stopping time.

9. A power saving program for a portable electronic apparatus according to claim 8 ; wherein
the touch panel stopping time is set as a time longer than the display stop time.

10. A power saving program for a portable electronic apparatus according to claims 8 or 9 ; further comprising;
a step for stopping the power supply to a backlight which irradiates the display which displays an information when a first display stop time elapses, and
a step for stopping the power supply to the display when a second display stop time elapses.
